# EUROPÄISCHE PATENTSCHRIFT

(11) **EP 0 347 633 B1**
(45) Veröffentlichungstag und Bekanntmachung des Hinweises auf die Patenterteilung: **14.04.1993**
(21) Anmeldenummer: 89110048.9
(22) Anmeldetag: 02.06.1989
(51) Int. Cl.: B60P 1/64

(54) **Müllsammelfahrzeug mit als Wechselbehälter ausgebildeten, auf einem Kipprahmen hin- und herverschieblich geführten Containern**
Refuse-collecting vehicle with containers as alternative receptacles shiftable back and forth on a tipping frame
Camion poubelle avec conteneur comme récipient de changement sur un châssis basculant mobile vers l'avant et vers l'arrière

(30) Priorität: 22.06.1988 DE 3821094; 29.11.1988 DE 3840246
(43) Veröffentlichungstag der Anmeldung: 27.12.1989
(73) Patentinhaber: EDELHOFF POLYTECHNIK GMBH & CO., D-58640 Iserlohn (DE)
(72) Erfinder: Kirchhoff, Johannes, D-5860 Iserlohn (DE); Sandkühler, Georg, D-5870 Hemer 6 (DE)
(74) Vertreter: Gossel, Hans K., Dipl.-Ing.

(56) Entgegenhaltungen:
- DE-A- 3 636 037
- GB-A- 2 146 003
- US-A- 3 462 033

## Beschreibung

Die Erfindung betrifft ein Müllsammelfahrzeug mit als Wechselbehälter ausgebildeten Containern, die jeweils mit einem Kipprahmen, der durch mindestens eine erste hydraulische Druckmittel-Kolben-Zylinder-Einheit relativ zu dem Hauptrahmen des Chassis um eine beide verbindende, am hinteren Endbereich beider Rahmen angeordnete Querachse schwenkbar ist, durch lösbare Kupplungseinrichtungen verbunden und die auf diesem Kipprahmen in Längsführungen oder auf einer Kulisse durch eine zweite hydraulische Druckmittel-Kolben-Zylinder-Einheit in Richtung zum Heck ausfahrbar oder in Richtung zum Fahrerhaus einfahrbar geführt sind, und mit einer die zweite hydraulische Druckmittel-Kolben-Zylinder-Einheit auf Schwimmstellung schaltenden Einrichtung.

Bei einem aus der DE-A-36 36 037 bekannten Fahrzeug dieser Art, bei dem es sich jedoch nicht speziell um ein Müllsammelfahrzeug handelt, wird die Steuerung des Aufnahme- und Absetzvorgangs eines Containers dadurch vereinfacht, daß zunächst der Container um ein vorbestimmtes Maß auf dem Kipprahmen über das Fahrzeugheck hinaus ausgefahren und anschließend der Kipprahmen durch Betätigung der ersten Druckmittel-Kolben-Zylinder-Einheiten gekippt wird, bis der untere Bereich des hinteren Endes des Behälters auf der Fahrbahnoberfläche aufliegt. Die den Container auf dem Hilfsrahmen verfahrende zweite Druckmittel-Kolben-Zylinder-Einheit wird sodann auf Schwimmstellung geschaltet, so daß der Kipprahmen ohne besondere Steuerung der zweiten Druckmittel-Kolben-Zylinder-Einheit durch den ersten Hydraulikzylinder in die Vertikale gekippt werden kann, in der er dann hochkant auf seiner hinteren Seite steht. Während des Kippens bis in die Vertikale läßt sich aufgrund der Schwimmschaltung der zweite Hydraulikzylinder in der erforderlichen Weise aus- oder einschieben. Bei dem bekannten Containerfahrzeug erfolgt das Aufnehmen des Containers in entsprechend umgekehrter Weise.

Bei dem bekannten Containerfahrzeug besteht die Gefahr, daß der Container bei schräg stehendem Kipprahmen über das Heck des Fahrzeugs in unerwünschter Weise abrutschen kann, wenn die zweite Druckmittel-Kolben-Zylinder-Einheit auf Schwimmstellung geschaltet ist.

Aufgabe der Erfindung ist es daher, ein Containerfahrzeug der eingangs angegeben Art zu schaffen, das mit einer Abrutschsicherung für den Container in der Schwimmstellung der zweiten Druckmittel-Kolben-Zylinder-Einheit versehen ist.

Weiterhin soll die Möglichkeit geschaffen werden, den Container durch Bedienung nur eines Ventils unter Betätigung einer von außen zugänglichen Feststellbremse des Fahrzeugs ohne Verspannung der Absetzeinrichtungen abzusetzen.

Erfindungsgemäß wird diese Aufgabe bei einem Containerfahrzeug der gattungsgemäßen Art dadurch gelöst, daß die zweite Druckmittel-Kolben-Zylinder-Einheit mit einem Wegeventil verbunden ist, das neben den Ein- und Ausfahrstellungen die Schwimmstellung aufweist, in der die zu den Zylinderkammern führenden Leitungen miteinander und mit der zum Tank führenden Rücklaufleitung verbunden sind, und daß in der zu der Ausfahrzylinderkammer führenden Leitung ein steuerbares Rückschlagventil angeordnet ist, das den Rückfluß von Druckmittel aus dieser sperrt und das durch Steuerleitungen überbrückbar ist, die dieses entsperren, wenn die den Container auf dem Hilfsrahmen verfahrende zweite Druckmittel-Kolben-Zylinder-Einheit in Ausfahrrichtung oder die den Hilfsrahmen verschwenkende Druckmittel-Kolben-Zylinder-Einheit in Einfahrrichtung mit Druckmittel beaufschlagt werden.

Um einen Container von einem Container- oder Müllsammelfahrzeug nach der Erfindung abzusetzen und zu lösen, wird der Container auf den Kipprahmen, gegebenenfalls unter gleichzeitigem Aufrichten des Kipprahmens, so weit nach hinten verschoben, daß die Containerverschlußklappe, die zwischen dem Fahrerhaus und dem Container liegt, geschlossen und die vordere untere Kante des Containers behinderungsfrei an dem Fahrerhaus oder an dem Aufnahme- und Verdichtungsraum, dem sogenannten Packer, der hinter dem Fahrerhaus eines Müllsammelfahrzeugs angeordnet ist, vorbeischwenken kann. Ist der Container auf dem Kipprahmen durch die zweite Druckmittel-Kolben-Zylinder-Einheit so weit über das Heck hinaus gefahren worden, daß die hintere untere Kante des Containers bei einem weiteren Verschwenken des Kipprahmens in Aufstellrichtung die Fahrbahn oder den Boden berühren kann, kann die zweite Druckmittel-Kolben-Zylinder-Einheit auf Schwimmstellung geschaltet werden. In dieser Schwimmstellung verhindert das Rückschlagventil, daß der Container in unerwünschter Weise unter Schwerkraftwirkung abrutscht. Hat der Container mit seiner hinteren unteren Kante den Boden berührt, wird dieser auf dem Kipprahmen durch dessen weiteres Aufrichten in Einfahrrichtung verschoben. Da jedoch das Rückschlagventil in der Schwimmstellung die Einfahrbewegung freigibt, kann ein weiteres Aufrichten des Containers unter Zurückziehen des Fahrzeugs erfolgen. Um bei diesem weiteren Aufrichten ein Laufen des Fahrzeugs nach hinten zu ermöglichen, sind zuvor die Fahrzeugbremsen zu lösen.

Soll nun ein in senkrechter Stellung bereitgestellter Container von dem Container- oder Müllsammelfahrzeug wieder aufgenommen werden, wird der senkrecht gestellte Kipprahmen mit in etwa ausgefahrener zweiter Druckmittel-Kolben-Zylinder-Einheit an diesen angekuppelt. Werden nun zum Kippen des Containers die ersten den Kipprahmen verschwenkenden Druckmittel-Kolben-Zylinder-Einheiten eingefahren, wird durch den Druck auf die Einfahrzylinderkammer oder Einfahrzylinderkammern das Rückschlagventil gelöst, so daß sich in der Schwimmstellung der zweiten Druckmittel-Kolben-Zylinder-Einheit der Container unter der Schwerkraftwirkung über das Heck ausziehen läßt. Die zweite Druckmittel-Kolben-Zylinder-Einheit wird dann von der Schwimmstellung über das Wegeventil auf die Ausfahrstellung geschaltet, wenn behinderungsfreies Einfahren des Containers in die Transportstellung auf dem Fahrzeug möglich ist.

In weiterer Ausgestaltung der Erfindung ist vorgesehen, daß ein durch eine Steuerleitung mit der Ausfahrzylinderkammer der zweiten Druckmittel-Kolben-Zylinder-Einheit und durch eine weitere Steuerleitung mit der unter den Einfahrzylinderkammern der ersten Druckmittel-Kolben-Zylinder-Einheit verbundenes ODER-Ventil vorgesehen ist, das bei Druck auf einer der beiden Steuerleitungen das Rückschlagventil entsperrt. Diese Ausgestaltung führt zu einer einfachen Schaltungsanordnung, da über dasselbe ODER-Ventil das Rückschlagventil inaktiviert wird, wenn die zweite Druckmittel-Kolben-Zylinder-Einheit über das zugehörige Wegeventil auf Ausfahren geschaltet ist oder wenn in der Schwimmstellung der zweiten Druckmittel-Kolben-Zylinder-Einheit die Kippzylinder den Kipprahmen in Richtung auf den Hauptrahmen verschwenken.

In weiterer Ausgestaltung der Erfindung ist vorgesehen, daß an dem außerhalb des Fahrerhauses befindlichen Steuerstand für die hydraulischen Ventile eine Betätigungseinrichtung für die Handbremse vorgesehen ist, mit der sich diese entriegeln und anziehen läßt. Erfindungsgemäß läßt sich also nach Bedarf mit entsprechender Betätigung der Ventile sogleich auch die Handbremse betätigen. Das erfindungsgemäße Müllsammelfahrzeug gestattet daher ein wesentlich vereinfachtes Absetzen des Containers. Weiterhin läßt sich dieser auch in vereinfachter Form wieder aufnehmen.

Ein Ausführungsbeispiel der Erfindung wird nachstehend anhand der Zeichnung näher erläutert.

In dieser zeigt
- Fig.1: ein Müllsammelfahrzeug mit Kipprahmen und auf diesem hin- und herverschieblich geführten Container in Seitenansicht,
- Fig.2: ein der Fig.1 entsprechende Darstellung des Müllsammelfahrzeugs mit nach hinten weiter über das Heck abgeschobenem Container,

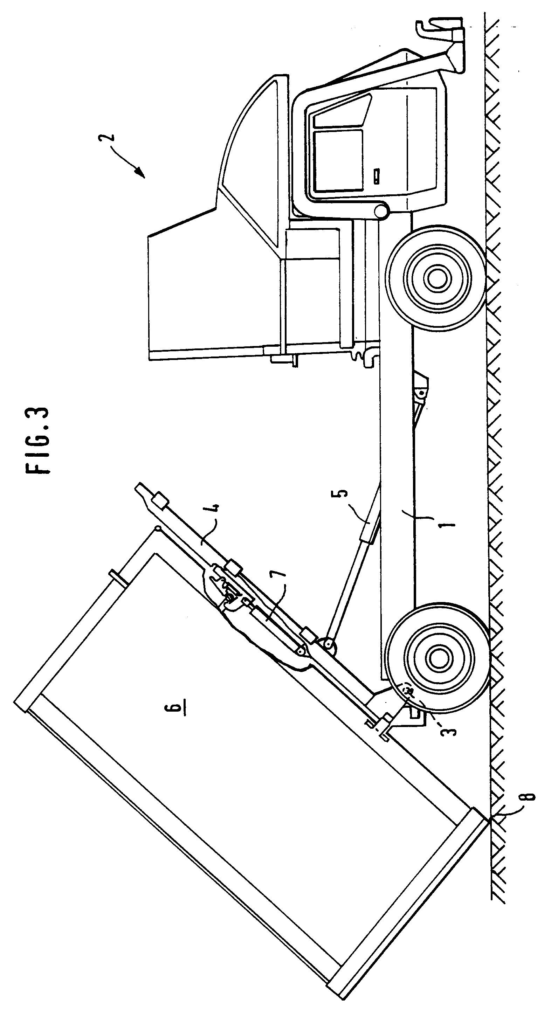

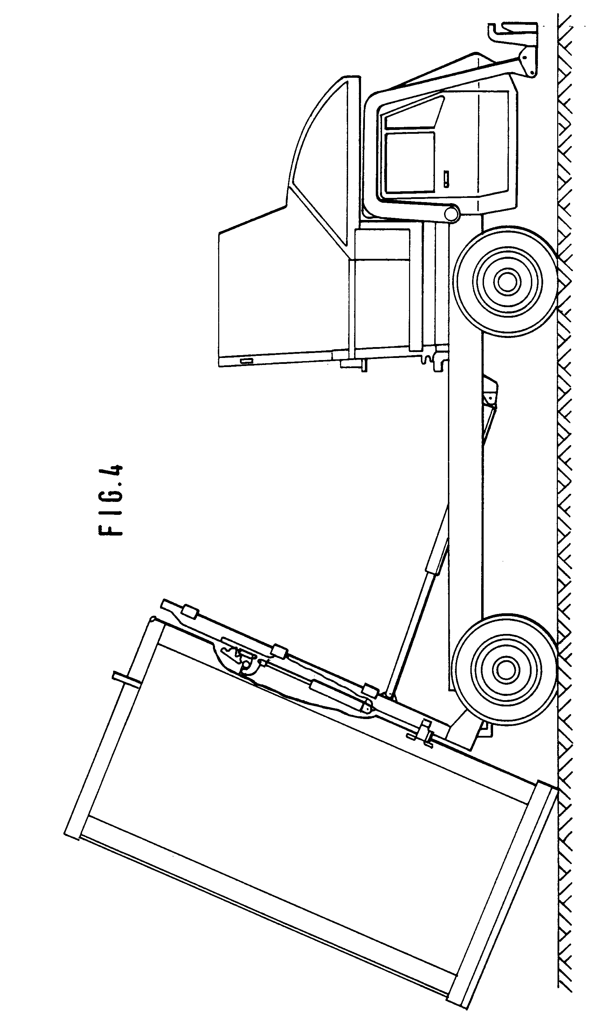

- Fig.3 und Fig.4: unterschiedliche Stellungen des Kipprahmens und des Containers während des Absetzvorganges,
- Fig.5: den hochkant stehenden Container mit noch angekuppeltem Kipprahmen,
- Fig.6: die hydraulische Steuerung der Kipp- und Verschiebezylinder in schematischer Darstellung und
- Fig.7: eine Seitenansicht der Verriegelungsvorrichtung zur Verriegelung des Kipprahmens mit dem Container

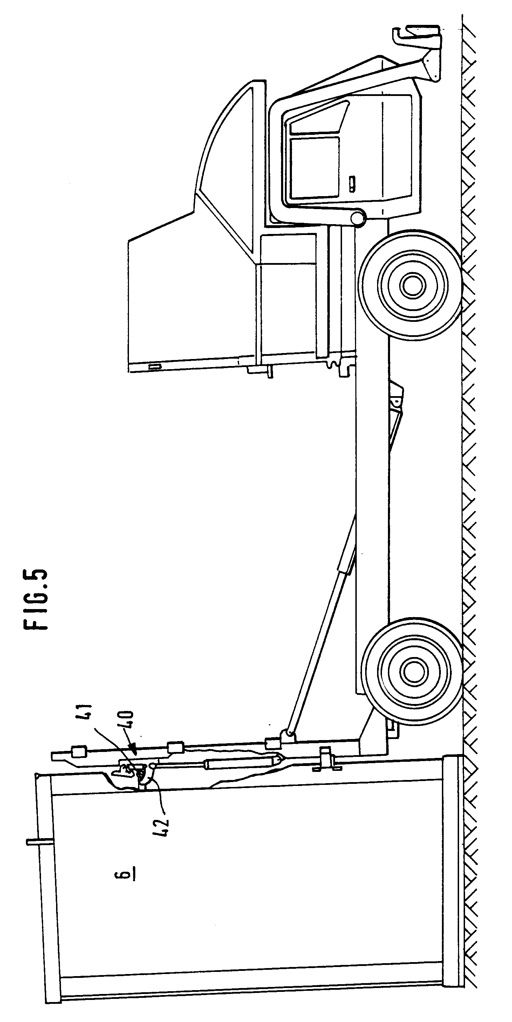

Auf dem Chassis 1 des Müllsammelfahrzeugs 2 ist um die nicht sichtbare Querachse 3 der Kipprahmen 4 schwenkbar gelagert, der durch die hydraulische Druckmittel-Kolben-Zylinder-Einheit 5 zwischen seiner waagerecht auf dem Chassis 1 liegenden Stellung und seiner senkrecht zu dem Chassis stehenden Stellung, die aus Fig.5 ersichtlich ist, verschwenkbar ist. Der Container 6 ist in Führungen oder durch Kulissen auf dem Kipprahmen 4 längsverschieblich geführt und auf diesem durch eine hydraulische Kolben-Zylinder-Einheit 7 hin- und herverfahrbar.

Die Kolbenstange 32 der Druckmittel-Kolben-Zylinder-Einheit 7, die den Container 6 auf dem Kipprahmen 4 hin-und herverfährt ist in der Transportstellung des Containers 6, wenn der Container 6 mit dem Packer verriegelt ist, ausgefahren.

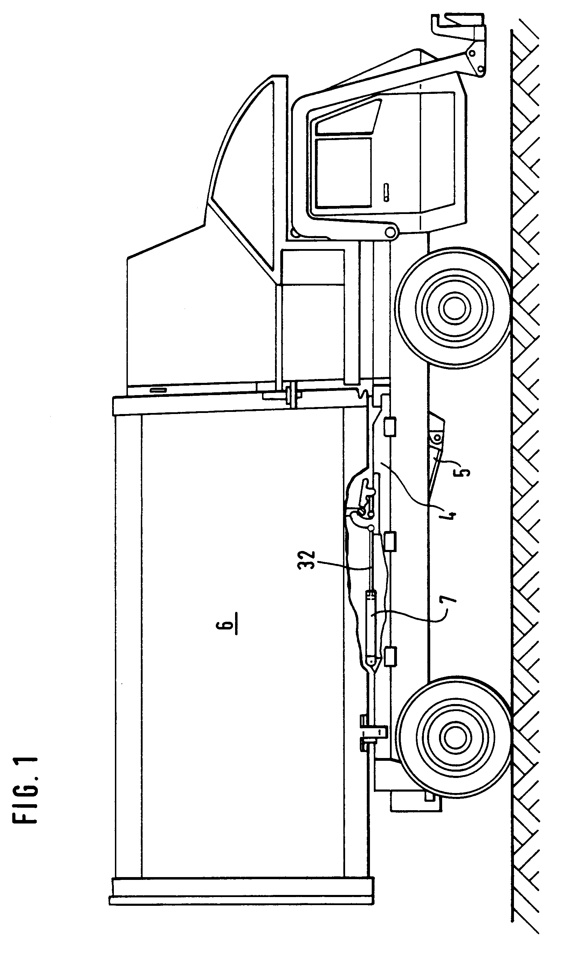

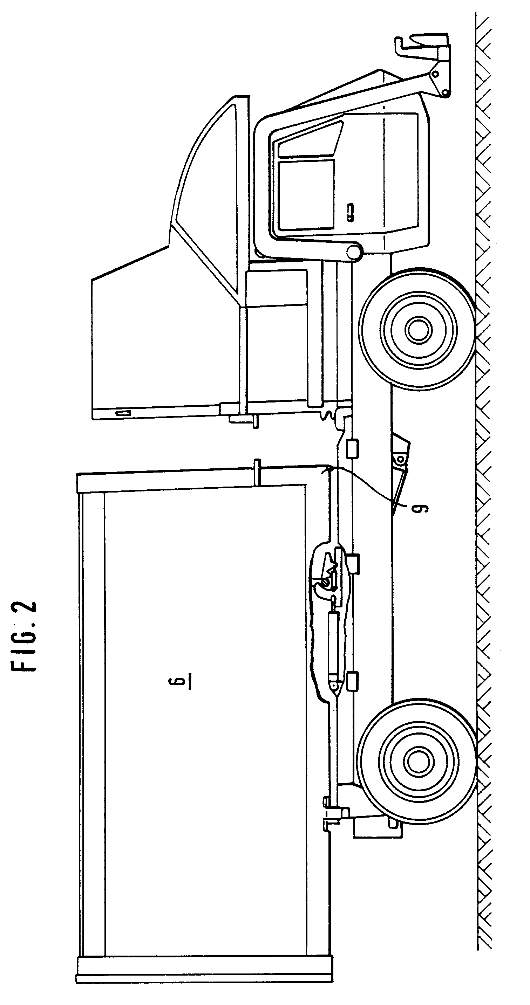

Um den Container 6 abzusetzen, wird dieser auf dem Kipprahmen 4 zunächst aus der in Fig.1 ersichtlichen Stellung etwa in die aus Fig.2 ersichtliche Stellung so weit nach hinten weiter über das Fahrzeugheck hinausgeschoben, daß die in der Vorderwand des Containers befindliche Verschlußklappe geschlossen werden kann und beim Kippen des Kipprahmens 4 die untere vordere Kante 9 des Containers behinderungsfrei an dem Packer vorbeischwenken kann. Wie aus Fig. 1 ersichtlich ist, ist die Kolbenstange 32 in der eingefahrenen Transportstellung des Containers 6 nahezu vollständig aus dem Zylinder der Druckmittel-Kolben-Zylinder-Einheit 7 ausgeschoben, während sie in der nach hinten ausgefahrenen Stellung des Containers 6, die aus Fig.2 ersichtlich ist, nahezu vollständig in den Zylinder eingeschoben ist.

Sobald der Container 6 auf dem Kipprahmen 4 in der aus Fig.2 ersichtlichen Weise nach hinten gefahren worden ist, wird der Kipprahmen 4 über die Druckmittel-Kolben-Zylinder-Einheit 5 nach hinten gekippt, bis die hintere untere Kante 8 des Containers 6 den Boden berührt. Da die Druckmittel-Kolben-Zylinder-Einheit 7 auf Schwimmstellung geschaltet ist, kann durch weiteres Aufrichten des Kipprahmens 4 über die Druckmittel-Kolben-Zylinder-Einheit 5 der Container 6 auf dem Kipprahmen 4 wieder in Richtung auf seine eingefahrene Stellung verschoben werden. Sobald die hintere untere Kante 8 des Containers 6 den Boden berührt hat, wird die Fahrzeugbremse gelöst, so daß entsprechend der Verschiebung des Containers 6 auf dem Kipprahmen 4 in Richtung auf die eingefahrene Stellung das Fahrzeug 2 nachrollen kann.

Hat der Container 6 nach Kippen über die aus Fig .4 ersichtliche Stellung aus Fig. 5 ersichtliche senkrechte Stellung erreicht, wird die Verriegelung gelöst und das Müllsammelfahrzeug kann abgefahren werden.

Zur Aufnahme eines Containers 6 wird der Kipprahmen wiederum in seine aus Fig.5 ersichtliche vertikale Stellung geschwenkt, wobei die Verriegelungseinrichtung durch die Druckmittel-Kolben-Zylinder-Einheit 7 etwa in eine Stellung verfahren worden ist, die der eingefahrenen Stellung des Containers entspricht.

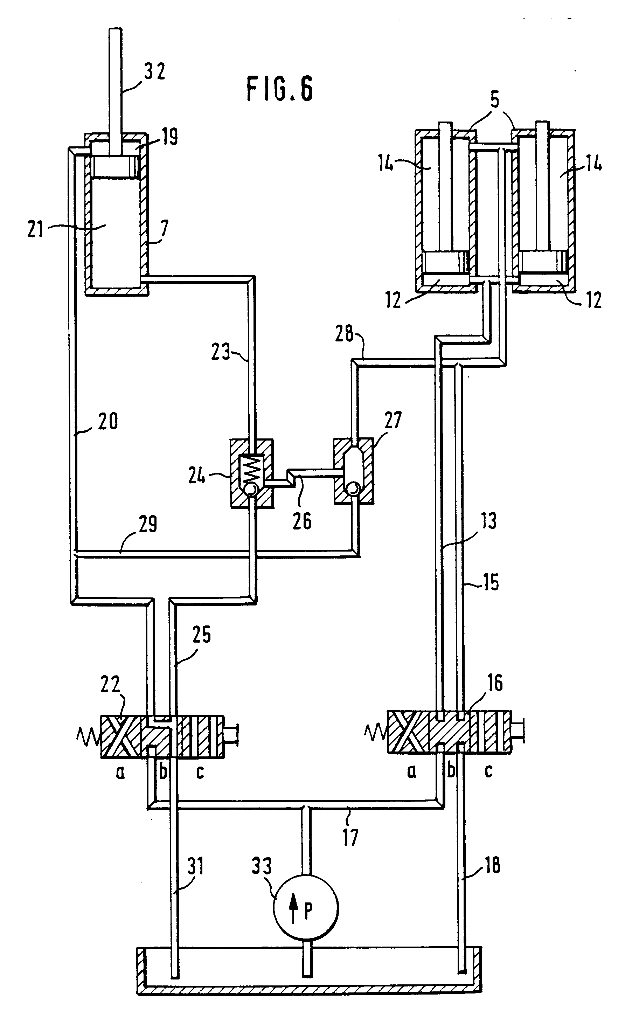

Wie aus Fig. 6 ersichtlich ist, sind die Kippzylinder 5 doppelt vorgesehen. Die Aussschubkammern 12 der Kippzylinder 5 sind mit der Hydraulikleitung 13 und die Einzugskammern 14 mit der Hydraulikleitung 15 verbunden. Die Hydraulikleitungen 13,15 führen zu dem Wegeventil 16, das weiterhin über die Druckleitung 17 mit der Pumpe 33 und der zu dem Tank führenden Rücklaufleitung 18 verbunden ist.

Die Kammer 19 des Zylinders 7, bei deren Beaufschlagung mit Druck der Container in Ausfahrrichtung bewegt wird, ist über eine Hydraulikleitung 20 mit dem Steuerventil 22 verbunden, während die die Einfahrbewegung des Containers bewirkende Kammer 21 über eine Hydraulikleitung 23 mit dem steuerbaren Rückschlagventil 24 verbunden ist. Das steuerbare Rückschlagventil 24 ist über eine Hydraulikleitung 25 mit dem Wegeventil 22 verbunden. Das steuerbare Rückschlagventil 24 ist über eine Steuerleitung 26 entsperrbar, die mit dem ODER-Ventil 27 verbunden ist. Das ODER-Ventil 27 ist durch eine Steuerleitung 28 mit der Hydraulikleitung 15 und eine weitere Steuerleitung 29 mit der Hydraulikleitung 20 verbunden. Das Wegeventil 22 verschiebt in seinen Stellungen a und b die Kolbenstange 32 des Zylinders 7 hin und her, so daß sich in den Stellungen a und b der Container auf dem Kipprahmen 4 in Richtung auf das Fahrerhaus ein- und in Richtung über das Heck ausfahren läßt.

In der Stellung b des Wegeventils 22 befindet sich der Zylinder 7 in seiner Schwimmstellung. In dieser Stellung sind die Leitungen 20,25 miteinander und mit der Rücklaufleitung 31 zum Tank verbunden.

Wie aus Fig. 2 ersichtlich ist, läßt sich die Kolbenstange 32 des Zylinders 7 in der Schwimmstellung ausziehen, so daß der Container 6 in Richtung auf seine eingefahrene Stellung bewegt werden kann, da das Rückschlagventil 24 in Durchgangsrichtung beaufschlagt wird. Der Auszug der Kolbenstange 32 aus dem Zylinder 7 entspricht also der Einfahrbewegung des Containers. Hingegen ist durch das Rückschlagventil 24 die Absenkbewegung des Containers gesperrt, so daß ein unbeabsichtigtes Abrutschen des Containers bei schräg gestelltem Kipprahmen mit allen dadurch gegebenen Gefahren vermieden ist.

In der Stellung a des Wegeventils 22 läßt sich die Kolbenstange 32 ausschieben und der Container in Richtung auf das Fahrerhaus auf dem Kipprahmen bewegen, da in dieser Stellung das Rückschlagventil in Durchgangsrichtung beaufschlagt wird.

Wird während der Einzugsbewegung des Zylinders 5, also beim Absenken des Kipprahmens auf das Chassis die Hydraulikleitung 15 mit Druck beaufschlagt, wird über die Steuerleitung 28 das ODER-Ventil mit Druck beaufschlagt, so daß auch die Steuerleitung 26 Druck führt und dadurch das steuerbare Rückschlagventil 24 ensperrt. Diese Entsperrung ist erforderlich, wenn in der Schwimmstellung des Zylinders 7 der Kipprahmen einen senkrecht stehenden Container durch Ankuppeln aufgenommen hat und dieser in seine waagerechte Stellung auf dem Chassis gekippt werden soll.

Wird der Container 6 weiter über das Heck ausgefahren, wird in der Stellung c des Wegeventils 22 die Kolbenstange 32 in den Zylinder eingeschoben. Während dieser Einschubbewegung der Kolbenstange 32 in den Zylinder 7 ist die Hydraulikleitung 20 mit Druck beaufschlagt, so daß auch die Steuerleitung 29 und die Steuerleitung 26 mit Druck beaufschlagt sind und dadurch das Rückschlagventil 24 entsperrt wird. In dieser Stellung ist die Hydraulikleitung 23 mit der Rücklaufleitung 21 verbunden.

Wird also in der Schwimmstellung der Kolben-Zylinder-Einheit 7 der Zylinder 5 ausgefahren, erteilt dieser dem Kipprahmen 4 eine aufrichtende Schwenkbewegung, wobei ein ungewolltes Absinken des Containers 6 durch das Rückschlagventil 24 verhindert ist. Nach Berührung des Containers 6 mit dem Boden zieht dieser das Müllsammelfahrzeug 2 nach hinten. Die Schwimmstellung wird dabei wirksam, weil das Rückschlagventil 24 in Durchgangsrichtung von dem Druckmittel beaufschlagt wird.

Um die Fahrzeugbremse im geeigneten Zeitpunkt lösen zu können, also wenn nach Einschalten der Schwimmstellung der Container mit seiner hinteren unteren Kante den Boden berührt hat, ist zweckmäßigerweise im Bereich des Steuerstandes für die hydraulischen Steuerventile eine Entriegelungseinrichtung für die Handbremse angeordnet. Es kann eine pulsierend lösbare Bremse mit einem Federspeicherbremszylinder vorgesehen sein, der eine entsprechend zähe kontrollierbare Bewegung des Müllsammelfahrzeugs zuläßt.

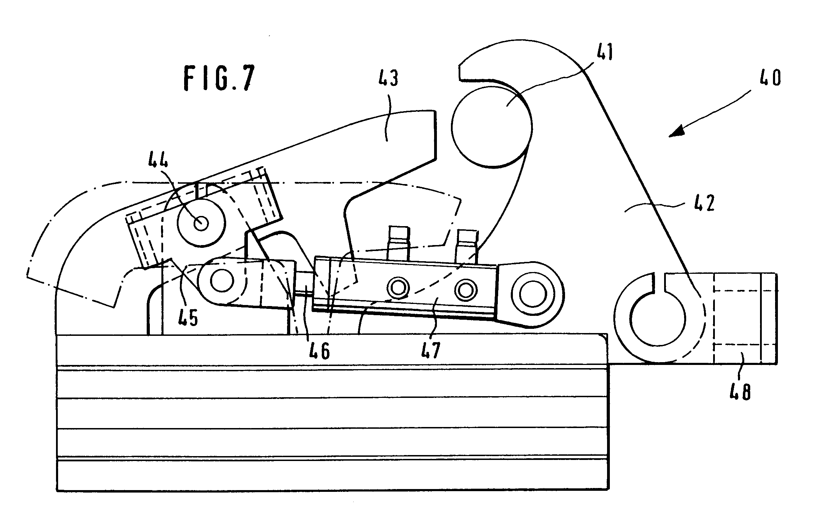

Aus Fig.7 ist die Verriegelungseinrichtung 40 zum Ankuppeln der auf dem Kipprahmen 4 verschieblichen Kulisse an eine Öse 41 des Containers 6 ersichtlich. Die Verriegelungseinrichtung besteht aus einem Haken 2, der mit einer die Öse 41 in dem Haken verriegelnden Zunge 43 versehen ist. Die Zunge 43 ist in der Kulisse um eine Querachse 44 schwenkbar gelagert. Zum Verschwenken der Zunge 43 ist diese mit einem einen Hebel bildenden Vorsprung 45 versehen, an der die Kolbenstange 46 einer hydraulischen Kolben-Zylinder-Einheit angelenkt ist, deren Zylinder 47 gelenkig an der Kulisse im Bereich des Fußes des Hakens 42 gelagert ist. An die in Führungen verfahrbare Kulisse ist über das Anschlußstück 48 die Kolbenstange 32 des Zylinders 7 gelenkig angeschlossen.

## Patentansprüche

1. Containerfahrzeug, vorzugsweise Müllsammelfahrzeug (2), mit als Wechselbehälter ausgebildeten Containern (6), die jeweils mit einem Kipprahmen (4), der durch mindestens eine erste hydraulische Druckmittel-Kolben-Zylinder-Einheit (5) relativ zu dem Hauptrahmen des Chassis um eine beide verbindende, im hinteren Endbereich beider Rahmen angeordnete Querachse (3) schwenkbar ist, durch lösbare Kupplungseinrichtungen verbunden und die auf diesem Kipprahmen (4) in Längsführungen und/oder auf einer Kulisse durch eine zweite hydraulische Druckmittel-Kolben-Zylinder-Einheit (7) in Richtung zum Heck ausfahrbar oder in Richtung zum Fahrerhaus einfahrbar geführt sind, und mit einer die zweite hydraulische Druckmittel-Kolben-Zylinder-Einheit (7) auf Schwimmstellung schaltenden Einrichtung,
**dadurch gekennzeichnet,**
daß die zweite Druckmittel-Kolben-Zylinder-Einheit (7) mit einem Wegeventil (22) verbunden ist, das neben den Ein- und Ausfahrstellungen (a,c) für den Container die Schwimmstellung (b) aufweist, in der die zu den Zylinderkammern (19,21) führenden Leitungen (20,23,25) miteinander und mit der zum Tank führenden Rücklaufleitung verbunden sind, und daß in der zu der das Einfahren des Containers bewirkenden Zylinderkammer (21) führenden Leitung (23,25) ein steuerbares Rückschlagventil (24) angeordnet ist, das den Rückfluß von Druckmittel aus dieser sperrt und das durch Steuerleitungen überbrückbar ist, die dieses entsperren, wenn die den Container (6) auf dem Hilfsrahmen (4) verfahrende zweite Druckmittel-Kolben-Zylinder-Einheit (7) in Ausfahrrichtung des Containers oder die den Hilfsrahmen (4) verschwenkende Druckmittel-Kolben-Zylinder-Einheit (5) in Einfahrrichtung mit Druckmittel beaufschlagt werden.

2. Containerfahrzeug nach Anspruch 1, dadurch gekennzeichnet, daß ein durch eine Steuerleitung (29) mit der das Ausfahren bewirkenden Zylinderkammer (19) der zweiten Druckmittel-Kolben-Zylinder-Einheit (7) und durch eine weitere Steuerleitung (28) mit der oder den Einschubzylinderkammern (15) der ersten Druckmittel-Kolben-Zylinder-Einheit (5) verbundenes ODER-Ventil (27) vorgesehen ist, das bei Druck auf einer der beiden Steuerleitungen (28,29) das Rückschlagventil (24) entsperrt.

3. Containerfahrzeug nach Anspruch 1 oder 2, dadurch gekennzeichnet, daß an dem außerhalb des Fahrerhauses befindlichen Steuerstand neben den Betätigungseinrichtungen für die hydraulischen Ventile (16,22) zusätzlich eine Betätigungseinrichtung für die Handbremse vorgesehen ist, mit der sich diese entriegeln und anziehen läßt.

## Claims

1. A container vehicle, preferentially a refuse collecting vehicle (2), with containers (6) designed as interchangeable containers, which are each connected by means of detachable coupling devices to a tipping frame (4) tiltable by at least a first hydraulic pressure medium piston-cylinder unit (5) relative to the main frame of the chassis round a transverse pin (3) joining both and arranged in the rear end zone of both frames and which are carried on this tipping frame (4) in longitudinal guideways and/or on a sliding-block guide for outward displacement towards the rear, or for retraction towards the cab by means of a second hydraulic pressure medium piston-cylinder unit (7), and with a device switching the second hydraulic pressure medium piston-cylinder unit (7) into a floating position,
characterized in that
the second hydraulic pressure medium piston-cylinder unit (7) is connected to a directional control valve (22) which has, apart from the positions (a, c), for the inward and outward movement of the container (6), the floating position (b), wherein the lines (20, 23, 25) leading to the cylinder chambers (19 21) are connected to each other and to the return line leading to the tank; and that in the line (23, 25) leading to the cylinder chamber (21) producing the inward movement of the container, there is arranged a controllable non-return valve (24) which bars the return flow of any pressure medium from the line and which is bridgeable by control lines that open the valve when the second hydraulic pressure medium piston-cylinder unit (7) displacing the container (6) on the auxiliary frame (4) is loaded with the pressure medium in the direction of outward travel of the container, or the hydraulic pressure medium piston-cylinder unit (5) tilting the auxiliary frame (4), in the direction of inward travel.

2. A container vehicle according to Claim 1, characterized in that provision is made for an OR valve (27) connected by a control line (29) to the cylinder chamber (19) of the second hydraulic pressure medium piston-cylinder unit (7) producing the outward travel and by a further control line (28) to the inward push cylinder chamber or chambers (15) of the first hydraulic pressure medium piston-cylinder unit (5), which OR valve opens the nonreturn valve (24) in the case of pressure on one of the two control lines (28, 29).

3. A container vehicle according to claim 1 or 2, characterized in that on the control post located outside the cab, provision is additionally made, apart from the actuating devices for the hydraulic valve (16, 22), for an actuating device for a handbrake whereby the latter can be released and applied.

## Revendications

1. Véhicule à conteneur, de préférence camion-poubelle (2), avec des conteneurs (6) réalisés sous forme de récipients de changement qui sont reliés par des dispositifs d'accouplement amovible respectivement à un châssis basculant (4) qui peut pivoter par au moins un premier ensemble piston-cylindre à fluide hydraulique sous pression (5) relativement au cadre principal du châssis autour d'un axe transversal (3) reliant les deux, disposé dans la zone extrême arrière des deux châssis, et qui sont guidés sur ce châssis basculant (4) dans des guidages longitudinaux et/ou sur une coulisse par un deuxième ensemble piston-cylindre à fluide hyraulique sous pression (7) de manière à pouvoir être sortis en direction vers l'arrière ou entrés en direction vers la cabine de conduite, et avec un dispositif commutant le deuxième ensemble piston-cylindre à fluide hydraulique sous pression (7) en position de flottement,
caractérisé en ce que
le deuxième ensemble piston-cylindre à fluide sous pression (7) est relié à un distributeur (22) qui présente à part les positions d'entrée et de sortie (a, c) pour le conteneur la position de flottement (b) dans laquelle les conduits (20, 23, 25) menant aux chambres du cylindre (19, 21) sont reliés entre eux et au conduit de retour menant vers le réservoir, et en ce qu'on a disposé dans le conduit (23, 25) menant à la chambre de cylindre (21) provoquant l'entrée du conteneur une soupape de retenue commandable (24) qui bloque le retour de fluide sous pression de celle-ci et qui peut être pontée par des conduits de commande qui débloquent celle-ci lorsque le deuxième ensemble piston-cylindre à fluide sous pression (7) déplaçant le conteneur (6) sur le châssis auxiliaire (4) dans la direction de sortie du conteneur ou que l'ensemble piston-cylindre à fluide sous pression (5) faisant pivoter le châssis auxiliaire (4) dans la direction de l'entrée sont alimentés en fluide sous pression.

2. Véhicule à conteneur selon la revendication 1, caractérisé en ce qu'il est prévue une vanne OU (27) reliée par un conduit de commande (29) à la chambre de cylindre (19) provoquant la sortie du deuxième ensemble piston-cylindre à fluide sous pression (7) et par un autre conduit de commande (28) à la ou les chambres de cylindre d'entrée (15) du premier ensemble piston-cylindre à fluide sous pression (5), et qui débloque la soupape de retenue (24) lorsqu'une pression est exercée sur l'un des deux conduits de commande (28, 29).

3. Véhicule à conteneur selon la revendication 1 ou 2, caractérisé en ce qu'il est prévu sur le poste de commande se trouvant à l'extérieur de la cabine de conduite à part les dispositifs d'actionnement des soupapes hydrauliques (16, 22) en plus un dispositif d'actionnement pour le frein à main permettant de désserrer et de serter celui-ci.
